# EUROPÄISCHE PATENTSCHRIFT

(11) **EP 1 422 860 B1**
(45) Veröffentlichungstag und Bekanntmachung des Hinweises auf die Patenterteilung: **19.01.2005**
(21) Anmeldenummer: 04001219.7
(22) Anmeldetag: 30.06.1999
(51) Int. Cl.: H04L 1/00

(54) **Luftschnittstelle für Telekommunikationssysteme mit drahtloser Telekommunikation zwischen mobilen und/oder stationären Sende/Empfangsgeräten**
Air interface for telecommunication systems with cordless telecommunication between mobile and/or stationary transmitting/receiving devices
Interface radio pour systèmes de télécommunication avec télécommunication sans fil entre des appareils d'émission/de réception mobiles et/ou fixes

(30) Priorität: 30.06.1998 DE 19829196
(43) Veröffentlichungstag der Anmeldung: 26.05.2004
(62) Teilanmeldung aus: 99942728.9
(73) Patentinhaber: SIEMENS AKTIENGESELLSCHAFT, 80333 München (DE)
(72) Erfinder: Jarbot, Lutz, 13465 Berlin (DE); Kunz, Albrecht, Prof., 66121 Saarbrücken (DE); Landenberger, Holger, 46395 Bocholt (DE); Nasshan, Markus, 85435 Erding (DE)

(56) Entgegenhaltungen:
- EP-A- 0 615 352
- EP-A- 0 627 827
- US-A- 5 606 580
- URIE A ET AL: "AN ADVANCED TDMA MOBILE ACCESS SYSTEM FOR UMTS AN EXAMPLE OF A TDMA-BASED SOLUTION FOR UMTS RADIO ACCESS" IEEE PERSONAL COMMUNICATIONS, US, IEEE COMMUNICATIONS SOCIETY, Bd. 2, Nr. 1, Februar 1995 (1995-02), Seiten 38-47, XP000489278 ISSN: 1070-9916
- ANDERMO P -G ET AL: "A CDMA-BASED RADIO ACCESS DESIGN FOR UMTS LOOKING FAR BEYOND THE CONCEPTS PROPOSED FOR CURRENT CELLULAR SYSTEMS" IEEE PERSONAL COMMUNICATIONS, US, IEEE COMMUNICATIONS SOCIETY, Bd. 2, Nr. 1, Seiten 48-53, XP000489279 ISSN: 1070-9916
- PILGER U: "STRUKTUR DES DECT-STANDARDS" NACHRICHTENTECHNIK ELEKTRONIK, DE, VEB VERLAG TECHNIK. BERLIN, Bd. 42, Nr. 1, Januar 1992 (1992-01), Seiten 23-29, XP000279214 ISSN: 0323-4657
- JUNG P ET AL: "KONZEPT EINES CDMA-MOBILFUNKSYSTEMS MIT GEMEINSAMER DETEKTION FUER DIE DRITTE MOBILFUNKGENERATION, TEIL 2" NACHRICHTENTECHNIK ELEKTRONIK, DE, VEB VERLAG TECHNIK. BERLIN, Bd. 45, Nr. 2, März 1995 (1995-03), Seiten 24-27, XP000499065 ISSN: 0323-4657

## Beschreibung

Telekommunikationssysteme mit drahtloser Telekommunikation zwischen mobilen und/oder stationären Sende-/Empfangsgeräten sind spezielle Nachrichtensysteme mit einer Nachrichtenübertragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren zur Mehrfachausnutzung der Nachrichtenübertragungsstrecke FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT [Digital Enhanced (früher: European) Cordless Telecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*], **GSM** [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P.Smolka "GSM-Funkschnittstelle - Elemente und Funktionen", Seiten 17 bis 24*],
   **UMTS** [**U**niversal **M**obile **T**elecommunication **S**ystem; vgl. **(1)**: *Nachrichtentechnik Elektronik, Berlin 45, 1995, Heft 1, Seiten 10 bis 14 und Heft* 2, *Seiten 24 bis 27; P. Jung, B.Steiner: "Konzept eines CDMA-Mobilfunksystems mit gemeinsa*mer *Detektion für die dritte Mobilfunkgeneration";* **(2)** : *Nach*richtentechnik *Elektronik, Berlin 41, 1991, Heft 6, Seiten 223 bis 227 und Sei te 234; P.W.Baier, P. Jung, A. Klein: "CDMA - ein günstiges Vielfachzugriffsverfahren für frequenzselektive und zeitvariante Mobilfunkkanäle";* **(3)**: *IEICE Transacti*ons on *Fundamentals of Electronics, Communications and Compu*ter *Sciences, Vol. E79-A, No. 12, December 1996,* Seiten *1930* bis *1937; P.W.Baier, P.Jung: "CDMA Myths and Realities Revisited";* **(4)**: *IEEE Personal Communications, February 1995, Seiten 38 bis 47; A. Urie, M. Streeton, C.Mourot: "An Advanced TDMA Mobile Access System for UMTS";* **(5)**: *telekom praxis, 5*/*1995, Seiten 9 bis 14; P.W.Baier: "Spread-Spectrum-Technik und CDMA - eine ursprünglich militärische Technik erobert den zivilen Bereich";* **(6)**: *IEEE Personal Communications, February 1995, Seiten 48 bis 53; P.G.Andermo, L.M.Ewerbring: "An CDMA-Based Radio Access Design for UMTS";* **(7)**:*ITG Fachberichte 124 (1993), Berlin, Offenbach: VDE Verlag ISBN 3-8007-1965-7,* Seiten *67 bis 75; Dr. T.Zimmermann,* Siemens AG: *"Anwendung von CDMA in der Mobilkommunikation";* **(8)**: *telcom report 16, (1993), Heft* 1, *Seiten 38 bis 41; Dr. T. Ketseoglou, Siemens AG* und *Dr. T.Zimmermann, Siemens AG*: *"Effizienter Teilnehmerzugriff für die 3. Generation der Mobilkommunikation - Vielfachzugriffsverfahren CDMA macht Luftschnittstelle flexib-ler";* **(9)**: *Funkschau 6*/*98: R. Sietmann* "*Ringen um die UMTS-Schnittstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"]
   erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf eine Luftschnittstelle für Telekommunikationssysteme mit drahtloser Telekommunikation zwischen mobilen und/oder stationären Sende-/Empfangsgeräten gemäß dem Oberbegriff des Patentanspruches 1.

Die nachfolgenden FIGUREN 1 bis 6 zeigen:
FIGUR 1 "Drei-Ebenen-Struktur" einer WCDMA/FDD-Luftschnittstelle im "Downlink",
FIGUR 2 "Drei-Ebenen-Struktur" einer WCDMA/FDD-Luftschnittstelle im "Uplink" ,
FIGUR 3 "Drei-Ebenen-Struktur" einer TDCDMA/TDD-Luftschnittstelle,
FIGUR 4 Funkszenario mit Kanal-Mehrfachausnutzung nach dem Frequenz-,/Zeit-,/Codemultiplex,
FIGUR 5 den prinzipiellen Aufbau einer als Sende-/Empfangsgerät ausgebildeten Basisstation,
FIGUR 6 den prinzipiellen Aufbau einer ebenfalls als Sende-/Empfangsgerät ausgebildeten Mobilstation.

Im UMTS-Szenario (3. Mobilfunkgeneration bzw. IMT-2000) gibt es z.B. gemäß der Druckschrift *Funkschau 6*/*98: R.Sietmann "Ringen um die UMTS-Schnittstelle", Seiten 76 bis 81* zwei Teilszenarien. In einem ersten Teilszenario wird der lizensierte koordinierte Mobilfunk auf einer WCDMA-Technologie (Wideband Code Division Multiple Access) basieren und, wie bei GSM, im FDD-Modus (Frequency Division Duplex) betrieben, während in einem zweiten Teilszenario der unlizensierte unkoordinierte Mobilfunk auf einer TD-CDMA-Technologie (Time Division-Code Division Multiple Access) basieren und, wie bei DECT, im TDD-Modus (Frequency Division Duplex) betrieben wird.

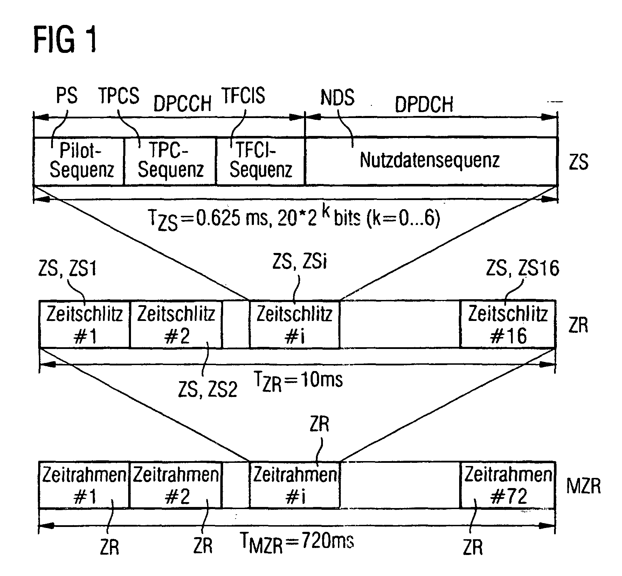

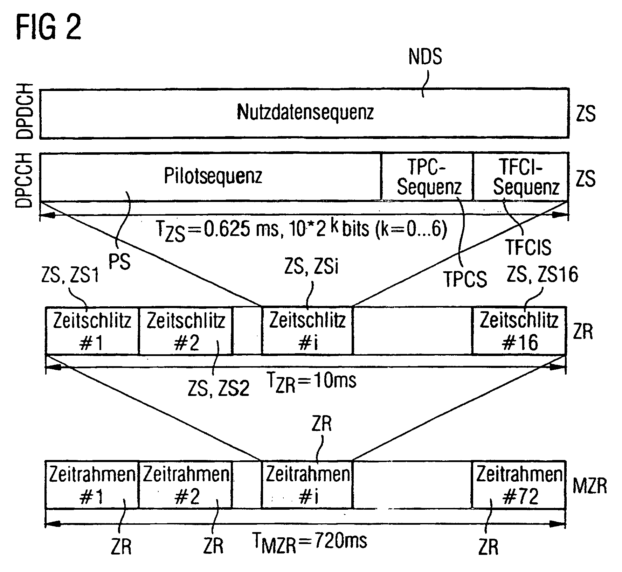

Für den WCDMA/FDD-Betrieb des Universal-Mobil-Telekommunikation-Systems enthält die Luftschnittstelle des Telekommunikationssystems in Auf- und Abwärtsrichtung der Telekommunikation gemäß der Druckschrift *ETSI STC SMG2 UMTS-L1, Tdoc SMG2 UMTS-L1 163*/*98: "UTRA Physical Layer Description FDD Parts" Vers. 0.3, 1998-05-29* jeweils mehrere physikalische Kanäle, von denen ein erster physikalischer Kanal, der sogenannte Dedicated Physical Control CHannel DPCCH, und ein zweiter physikalischer Kanal, der sogenannte Dedicated Physical Data CHannel DPDCH, in bezug auf eine "Drei-Ebenen-Struktur" (three-layer-structure), bestehend aus 720 ms lange (T_{MZR}=720 ms) Multizeitrahmen (super frame) MZR, 10 ms lange (T_{FZR}=10 ms) Zeitrahmen (radio frame) ZR und 0,625 ms lange (T_{ZS}=0,625 ms) Zeitschlitzen (timeslot) ZS , die in den FIGUREN 1 und 2 dargestellt sind. Der jeweilige Multizeitrahmen MZR enthält z.B. 72 Zeitrahmen ZR, während jeder Zeitrahmen ZR z.B. wiederum 16 Zeitschlitze ZS1...ZS16 aufweist. Der einzelne Zeitschlitz ZS, ZS1...ZS16 (Burst) weist bezüglich des ersten physikalischen Kanals DPCCH als Burststruktur eine Pilot-Sequenz PS mit einer Anzahl N_{PILOT} von Bits (N_{PILOT}-Bits) zur Kanalschätzung, eine TPC-Sequenz TPCS mit einer Anzahl N_{TPC} von Bits (N_{TPC}-Bits) zur insbesondere schnellen Leistungsregelung (Traffic Power Control) und eine TFCI-Sequenz TFCIS mit einer Anzahl N_{TFCI} von Bits (N_{TFCI}-Bits) zur Transportformatangabe (Traffic Format Channel Indication), die die Bitrate, die Art des Services, die Art der Fehlerschutzcodierung, etc. anzeigen, sowie bezüglich des zweiten physikalischen Kanals DPDCH eine Nutzdatensequenz NDS mit einer Anzahl N_{DATA} von Nutzdatenbits (N_{DATA}-Bits) auf. Die nachfolgende Tabelle 1 enthält die von der ARIB in der ARIB-Publikation
"Specications of Air-Interface for a 3G Mobile System", Volume- 3, June 1998 in der Tabelle 3.2.2-4 spezifizierten Bitwerte für den DPDCH-Kanal und den DPCCH-Kanal mit der Bitunterteilungen N_{PILOT}, N_{TPC}, N_{TFCI} bei Kanalbitraten von 64 bzw. 128 kbit/s.

| Kanalbitrate-(kbps) | Kanalsymbolrate-(ksps) | Spreizfaktor | Bits/Rahmen | | | Bits/Zeitschlitz | | | | |
|---|---|---|---|---|---|---|---|---|---|---|
| | | | | | | | DPDCH | DPCCH | | |
| | | | DPD CH | DPCCH | Total | | | N_{TFCI} | N_{TPC} | N_{PILOT} |
| 64 | 32 | 128 | 480 | 160 | 640 | 40 | 30 | 0 | 2 | 8 |
| 64 | 32 | 128 | 448 | 192 | 640 | 40 | 28 | 2 | 2 | 8 |
| 128 | 64 | 64 | 1120 | 160 | 1280 | 80 | 70 | 0 | 2 | 8 |
| 128 | 64 | 64 | 1088 | 192 | 1280 | 80 | 68 | 2 | 2 | 8 |

Im "Downlink" (Abwärtsrichtung der Telekommunikation; Funkverbindung von der Basisstation zur Mobilstation) des WCDMA/FDD Systems von ETSI bzw. ARIB - FIGUR 1 - werden der erste physikalische Kanal ["Dedicated Physical Control Channel (DPCCH)] und der zweite physikalische Kanal ["Dedicated Physical Data Channel (DPDCH)] zeitlich gemultiplext, während im "Uplink" (Aufwärtsrichtung der Telekommunikation; Funkverbindung von der Mobilstation zur Basisstation) - FIGUR 2 - ein I/Q-Multiplex stattfindet, bei dem der zweite physikalische Kanal DPDCH im I-Kanal und der erste physikalische Kanal DPCCH im Q-Kanal übertragen werden.

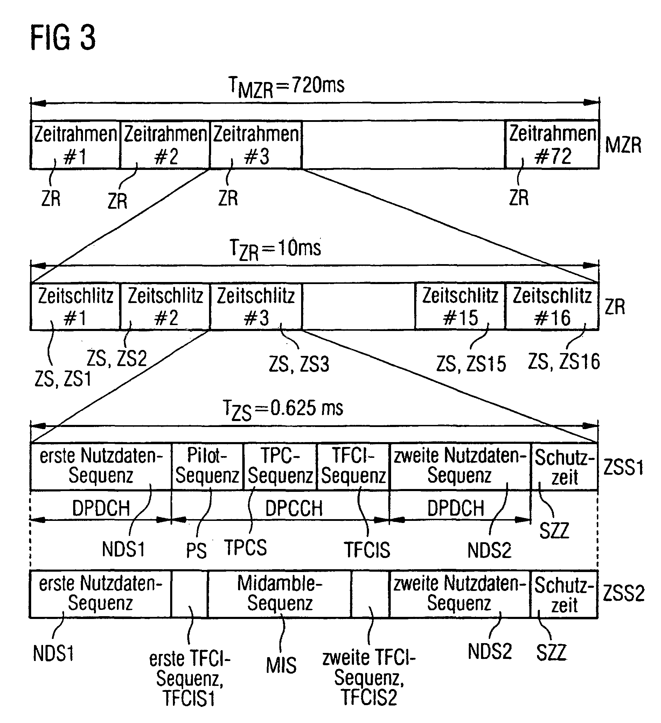

Für den TDCDMA/TDD-Betrieb des Universal-Mobil-Telekommunikation-Systems basiert die Luftschnittstelle des Telekommunikationssystems in Auf- und Abwärtsrichtung der Telekommunikation gemäß der Druckschrift *TSG RAN WG1 (S1.21): "3*^{*rd*} *Generation Partnership Project (3GPP) " Vers. 0.0.1, 1999*-*01* wiederum auf die "Drei-Ebenen-Struktur", bestehend aus den Multizeitrahmen MZR, den Zeitrahmen ZR und den Zeitschlitzen ZS, für sämtliche physikalischen Kanäle, die in FIGUR 3 dargestellt ist. Der jeweilige Multizeitrahmen MZR enthält wiederum z.B. 72 Zeitrahmen ZR, während jeder Zeitrahmen ZR z.B. wiederum die 16 Zeitschlitze ZS1...ZS16 aufweist. Der einzelne Zeitschlitz ZS, ZS1...ZS16 (Burst) weist entweder gemäß dem ARIB-Vorschlag eine erste Zeitschlitzstruktur (Burststruktur) ZSS1, in der Reihenfolge, bestehend aus einer ersten Nutzdatensequenz NDS1 mit N_{DATA1}-Bits, der Pilot-Sequenz PS mit N_{PILOT}-Bits zur Kanalschätzung, der TPC-Sequenz TPCS mit N_{TPC}-Bits zur Leistungsregelung, der TFCI-Sequenz TFCIS mit N_{TFCI}-Bits zur Transportformatangabe, einer zweiten Nutzdatensequenz NDS2 mit N_{DATA2}-Bits und einer Schutzzeitzone SZZ (guard period) mit N_{GUARD}-Bits, oder gemäß dem ETSI-Vorschlag eine zweite Zeitschlitzstruktur (Burststruktur) ZSS2, in der Reihenfolge bestehend aus der ersten Nutzdatensequenz NDS1, einer ersten TFCI-Sequenz TFCIS1, einer Midamble-Sequenz MIS zur Kanalschätzung, einer zweiten TFCI-Sequenz TFCIS2, der zweiten Nutzdatensequenz NDS2 und der Schutzzeitzone SZZ auf.

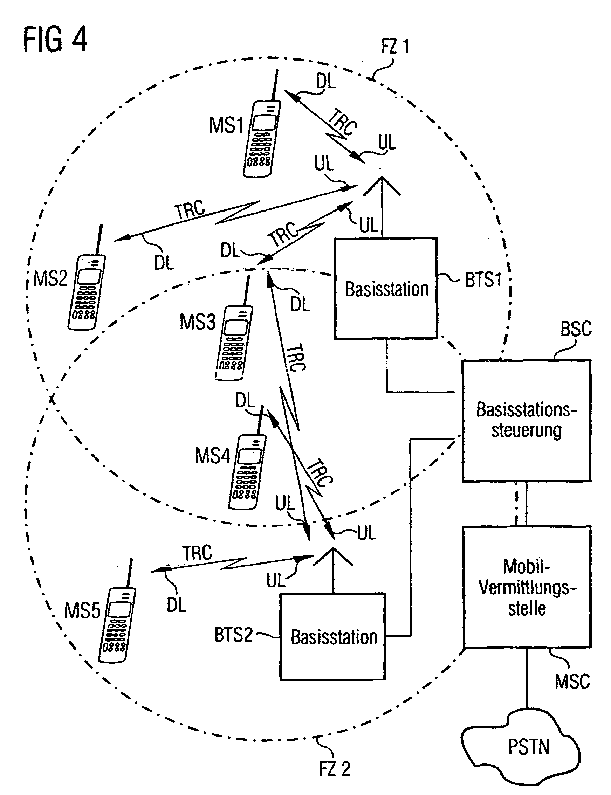

FIGUR 4 zeigt z.B. auf der Basis eines GSM-Funkszenarios mit z.B. zwei Funkzellen und darin angeordneten Basisstationen (Base Transceiver Station), wobei eine erste Basisstation BTS1 (Sender/Empfänger) eine erste Funkzelle FZ1 und eine zweite Basisstation BTS2 (Sende-/Empfangsgerät) eine zweite Funkzelle FZ2 omnidirektional "ausleuchtet", und ausgehend von den FIGUREN 1 und 2 ein Funkszenario mit Kanal-Mehrfachausnutzung nach dem Frequenz-/Zeit-/Codemultiplex, bei dem die Basisstationen BTS1, BTS2 über eine für das Funkszenario ausgelegte Luftschnittstelle mit mehreren in den Funkzellen FZ1, FZ2 befindlichen Mobilstationen MS1...MS5 (Sende-/Empfangsgerät) durch drahtlose uni- oder bidirektionale - Aufwärtsrichtung UL (Up Link) und/oder Abwärtsrichtung DL (Down Link) - Telekommunikation auf entsprechende Ubertragungskanäle TRC (Transmission Channel) verbunden bzw. verbindbar sind. Die Basisstationen BTS1, BTS2 sind in bekannter Weise (vgl. GSM-Telekommunikationssystem) mit einer Basisstationssteuerung BSC (**B**ase**S**tation **C**ontroller) verbunden, die im Rahmen der Steuerung der Basisstationen die Frequenzverwaltung und Vermittlungsfunktionen übernimmt. Die Basisstationssteuerung BSC ist ihrerseits über eine Mobil-Vermittlungsstelle MSC (**M**obile **S**witching **C**enter) mit dem übergeordneten Telekommunikationsnetz, z.B. dem PSTN (Public Switched Telecommunication Network), verbunden. Die Mobil-Vermittlungsstelle MSC ist die Verwaltungszentrale für das dargestellte Telekommunikationssystem. Sie übernimmt die komplette Anrufverwaltung und mit angegliederten Registern (nicht dargestellt) die Authentisierung der Telekommunikationsteilnehmer sowie die Ortsüberwachung im Netzwerk.

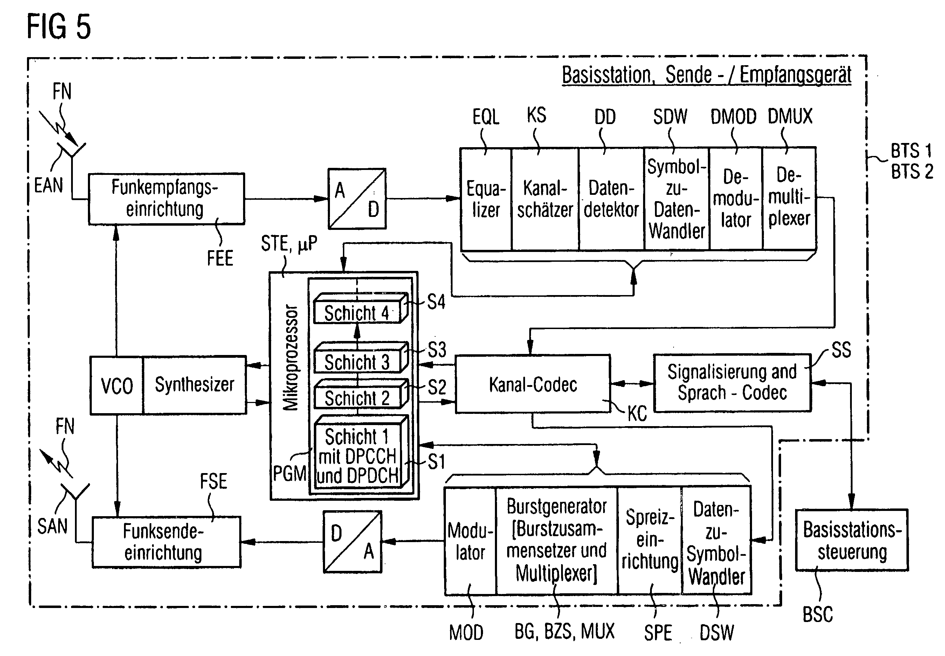

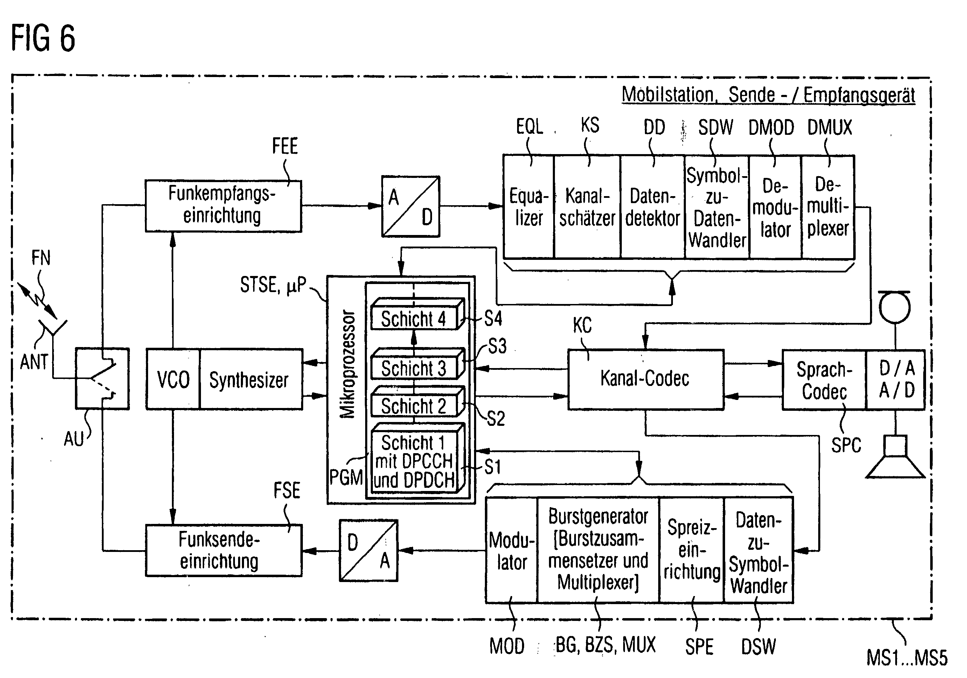

FIGUR 5 zeigt den prinzipiellen Aufbau der als Sende-/Empfangsgerät ausgebildeten Basisstation BTS1, BTS2, während FIGUR 6 den prinzipiellen Aufbau der ebenfalls als Sende-/Empfangsgerät ausgebildeten Mobilstation MS1...MS5 zeigt. Die Basisstation BTS1, BTS2 übernimmt das Senden und Empfangen von Funknachrichten von und zur Mobilstation MS1..MS5, während die Mobilstation MS1...MS5 das Senden und Empfangen von Funknachrichten von und zur Basisstation BTS1, BTS2 übernimmt. Hierzu weist die Basisstation eine Sendeantenne SAN und eine Empfangsantenne EAN auf, während die Mobilstation MS1...MS5 eine durch eine Antennenumschaltung AU steuerbare für das Senden und Empfangen gemeinsame Antenne ANT aufweist.

In der Aufwärtsrichtung (Empfangspfad) empfängt die Basisstation BTS1, BTS2 über die Empfangsantenne EAN beispielsweise mindestens eine Funknachricht FN mit einer Frequenz-/Zeit-/Code-Komponente von mindestens einer der Mobilstationen MS1...MS5, während die Mobilstation MS1...MS5 in der Abwärtsrichtung (Empfangspfad) über die gemeinsame Antenne ANT beispielsweise mindestens eine Funknachricht FN mit einer Frequenz-/Zeit-/Code-Komponente von mindestens einer Basisstation BTS1, BTS2 empfängt. Die Funknachricht FN besteht dabei aus einem breitbandig gespreizten Trägersignal mit einer aufmodulierten aus Datensymbolen zusammengesetzten Information.

In einer Funkempfangseinrichtung FEE (Empfänger) wird das empfangene Trägersignal gefiltert und auf eine Zwischenfrequenz heruntergemischt, die ihrerseits im weiteren abgetastet und quantisiert wird. Nach einer Analog/Digital-Wandlung wird das Signal, das auf dem Funkweg durch Mehrwegeausbreitung verzerrt worden ist, einem Equalizer EQL zugeführt, der die Verzerrungen zu einem großen Teil ausgleicht (Stw.: Synchronisation).

Anschließend wird in einem Kanalschätzer KS versucht die Übertragungseigenschaften des Übertragungskanals TRC auf dem die Funknachricht FN übertragen worden ist, zu schätzen. Die Übertragungseigenschaften des Kanals sind dabei im Zeitbereich durch die Kanalimpulsantwort angegeben. Damit die Kanalimpulsantwort geschätzt werden kann, wird der Funknachricht FN sendeseitig (im vorliegenden Fall von der Mobilstation MS1...MS5 bzw. der Basisstation BTS1, BTS2) eine spezielle, als Trainingsinformationssequenz ausgebildete Zusatzinformation in Form einer sogenannten Midambel zugewiesen bzw. zugeordnet.

In einem daran anschließenden für alle empfangenen Signale gemeinsamen Datendetektor DD werden die in dem gemeinsamen Signal enthaltenen einzelnen mobilstationsspezifischen Signalanteile in bekannter Weise entzerrt und separiert. Nach der Entzerrung und Separierung werden in einem Symbol-zu-Daten-Wandler SDW die bisher vorliegenden Datensymbole in binäre Daten umgewandelt. Danach wird in einem Demodulator DMOD aus der Zwischenfrequenz der ursprüngliche Bitstrom gewonnen, bevor in einem Demultiplexer DMUX die einzelnen Zeitschlitze den richtigen logischen Kanälen und damit auch den unterschiedlichen Mobilstationen zugeordnet werden.

In einem Kanal-Codec KC wird die erhaltene Bitsequenz kanalweise decodiert. Je nach Kanal werden die Bitinformationen dem Kontroll- und Signalisierungszeitschlitz oder einem Sprachzeitschlitz zugewiesen und - im Fall der Basisstation (FIGUR 5) - die Kontroll- und Signalisierungsdaten und die Sprachdaten zur Übertragung an die Basisstationssteuerung BSC gemeinsam einer für die Signalisierung und Sprachcodierung/decodierung (Sprach-Codec) zuständigen Schnittstelle SS übergeben, während - im Fall der Mobilstation (FIGUR 6) - die Kontroll- und Signalisierungsdaten einer für die komplette Signalisierung und Steuerung der Mobilstation zuständigen, vorzugsweise als Mikroprozessor µP ausgebildeten Steuer- und Signalisiereinheit STSE und die Sprachdaten einem für die Spracheingabe und -ausgabe ausgelegten Sprach-Codec SPC übergeben werden. Der Mikroprozessor µP in enthält ein auf der Basis des OSI/ISO-Schichtenmodells [vgl.: Unterrichtsblätter - Deutsche Telekom, Jahrgang 48, 2/1995, Seiten 102 bis 111] ausgebildetes Programmmodul PGM, in dem das Luftschnittstellenprotokoll für das UMTS-Szenario abgewickelt wird. Von dem im Schichtenmodell definierten Schichten sind nur die für die Mobilstation wesentlichen ersten vier Schichten, eine erste Schicht S1, eine zweite Schicht S2, eine dritte Schicht S3 und eine vierte Schicht S4, dargestellt, wobei in der ersten Schicht S1 u.a. der DPCCH-Kanal und der DPDCH-Kanal enthalten sind.

In dem Sprach-Codec der Schnittstelle SS in der Basisstation BTS1, BTS2 werden die Sprachdaten in einem vorgegebenen Datenstrom (z.B. 64kbit/s-Strom in Netzrichtung bzw. 13kbit/s-Strom aus Netzrichtung).

In einer vorzugsweise als Mikroprozessor µP ausgebildeten Steuereinheit STE wird die komplette Steuerung der Basisstation BTS1, BTS2 durchgeführt. Der Mikroprozessor µP enthält wieder das auf der Basis des OSI/ISO-Schichtenmodells [vgl.: Unterrichtsblätter - Deutsche Telekom, Jahrgang 48, 2/1995, Seiten 102 bis 111] ausgebildete Programmmodul PGM, in dem das Luftschnittstellenprotokoll für das UMTS-Szenario abgewickelt wird. Von dem im Schichtenmodell definierten Schichten sind wieder nur die für die Basisstation wesentlichen ersten vier Schichten, die erste Schicht S1, die zweite Schicht S2, die dritte Schicht S3 und die vierte Schicht S4, dargestellt, wobei in der ersten Schicht S1 u.a. wieder der DPCCH-Kanal und der DPDCH-Kanal enthalten sind.

In der Abwärtsrichtung (Sendepfad) sendet die Basisstation BTS1, BTS2 über die Sendeantenne SAN beispielsweise mindestens eine Funknachricht FN mit einer Frequenz-/Zeit-/Code-Komponente an mindestens eine der Mobilstationen MS1...MS5, während die Mobilstation MS1...MS5 in der Aufwärtsrichtung (Sendepfad) über die gemeinsame Antenne ANT beispielsweise mindestens eine Funknachricht FN mit einer Frequenz-/Zeit /Code-Komponente an mindestens einer Basisstation BTS1, BTS2 sendet.

Der Sendepfad beginnt bei der Basisstation BTS1, BTS2 in FIGUR 5 damit, dass in dem Kanal-Codec KC von der Basisstationssteuerung BSC über die Schnittstelle SS erhaltene Kontroll- und Signalisierungsdaten sowie Sprachdaten einem Kontroll- und Signalisierungszeitschlitz oder einem Sprachzeitschlitz zugewiesen werden und diese kanalweise in eine Bitsequenz codiert werden.

Der Sendepfad beginnt bei der Mobilstation MS1...MS5 in FIGUR 6 damit, dass in dem Kanal-Codec KC von dem Sprach-Codec SPC erhaltene Sprachdaten und von der Steuer- und Signalisiereinheit STSE erhaltene Kontroll- und Signalisierungsdaten einem Kontroll- und Signalisierungszeitschlitz oder einem Sprachzeitschlitz zugewiesen werden und diese kanalweise in eine Bitsequenz codiert werden.

Die in der Basisstation BTS1, BTS2 und in der Mobilstation MS1...MS5 gewonnene Bitsequenz wird jeweils in einem Datenzu-Symbol-Wandler DSW in Datensymbole umgewandelt. Im Anschluss daran werden jeweils die Datensymbole in einer Spreizeinrichtung SPE mit einem jeweils teilnehmerindividuellen Code gespreizt. In dem Burstgenerator BG, bestehend aus einem Burstzusammensetzer BZS und einem Multiplexer MUX, wird danach in dem Burstzusammensetzer BZS jeweils den gespreizten Datensymbolen eine Trainingsinformationssequenz in Form einer Midambel zur Kanalschätzung hinzugefügt und im Multiplexer MUX die auf diese Weise erhaltene Burstinformation auf den jeweils richtigen Zeitschlitz gesetzt. Abschließend wird der erhaltene Burst jeweils in einem Modulator MOD hochfrequent moduliert sowie digital/analog umgewandelt, bevor das auf diese Weise erhaltene Signal als Funknachricht FN über eine Funksendeeinrichtung FSE (Sender) an der Sendeantenne SAN bzw. der gemeinsamen Antenne ANT abgestrahlt wird.

TDD-Telekommunikationsysteme (Time Division Duplex) sind Telekommunikationssysteme, bei denen der Übertragungszeitrahmen, bestehend aus mehreren Zeitschlitzen, für die Abwärtsübertragungsrichtung (Downlink) und die Aufwärtsübertragungsrichtung (Uplink) - vorzugsweise in der Mitte - geteilt ist.

Ein TDD-Telekommunikationssystem, das einen derartigen Übertragungszeitrahmen aufweist, ist z.B. das bekannte DECT-System [Digital Enhanced (früher: European) Cordless Telecommunication; vgl. *Nachrichtentechnik Elektronik 42 (1992) Jan.*/*Feb. Nr. 1, Berlin, DE; U. Pilger "Struktur des DECT-Standards", Seiten 23 bis* 29 **in Verbindung mit** der ETSI-Publikation *ETS 300175-1...9, Oktober 1992* und der DECT-Publikation des *DECT-Forum, Februar 1997*, *Seiten 1 bis 16*]. Das DECT-System weist einen DECT-Übertragungszeitrahmen mit einer Zeitdauer von 10 ms, bestehend aus 12 "Downlink"-Zeitschlitzen und 12 "Uplink"-Zeitschlitzen, auf. Für eine beliebige bidirektionale Telekommunikationsverbindung auf einer vorgegebenen Frequenz in Abwärtsübertragungsrichtung DL (Down Link) und Aufwärtsübertragungsrichtung UL (Up Link) wird gemäß dem DECT-Standard ein freies Zeitschlitzpaar mit einem "Downlink"-Zeitschlitz und einem "Uplink"-Zeitschlitz ausgewählt, bei dem der Abstand zwischen dem "Downlink" -Zeitschlitz und dem "Uplink"-Zeitschlitz ebenfalls gemäß dem DECT-Standard die halbe Länge (5 ms) des DECT-Übertragungszeitrahmens beträgt.

FDD-Telekommunikationsysteme (**F**requency **D**ivision **D**uplex) sind Telekommunikationssysteme, bei denen der Zeitrahmen, bestehend aus mehreren Zeitschlitzen, für die Abwärtsübertragungsrichtung (Downlink) in einem ersten Frequenzband und für die Aufwärtsübertragungsrichtung (Uplink) in einem zweiten Frequenzband übertragen wird.

Ein FDD-Telekommunikationssystem, das den Zeitrahmen auf diese Weise überträgt, ist z.B. das bekannte GSM-System [Groupe Speciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale* europäi*sche Mobilfunknetze", Seiten 137 bis 152* **in Verbindung mit** der Publikation *telekom praxis 4*/*1993, P.Smolka "GSM-Funkschnittstelle - Elemente und Funktionen", Seiten 17 bis 24*].

Die Luftschnittstelle für das GSM-System kennt eine Vielzahl von als Übertragungswegdienste (bearer services) bezeichneten logischen Kanälen, so z.B. einen AGCH-Kanal (**A**ccess **G**rant **CH**annel), einen BCCH-Kanal (**B**road**C**ast **CH**annel, einen FACCH-Kanal (Fast **A**ssociated **C**ontrol **CH**annel), einen PCH-Kanal (**P**aging **CH**hannel), einen RACH-Kanal (**R**andom **A**ccess **CH**annel) und einen TCH-Kanal (Traffic CHannel), deren jeweilige Funktion in der Luftschnittselle z.B. in der Druckschrift *Informatik Spektrum 14 (1991) Juni, Nr. 3, Berlin, DE; A.Mann: "Der GSM-Standard - Grundlage für digitale europäische Mobilfunknetze*", *Seiten 137 bis 152* **in Verbindung mit** der Publikation *telekom praxis 4*/*1993, P.Smolka "GSM-Funkschnittstelle - Elemente und Funktionen", Seiten 17 bis 24* beschrieben ist.

Da im Rahmen des UMTS-Szenario (3. Mobilfunkgeneration bzw. IMT-2000) insbesondere der WCDMA/FDD-Betrieb und der TDCDMA/TDD-Betrieb gemeinsam zum Einsatz kommen sollen, ist eine gute Performance bzw. Leistungsfähigkeit des Telekommunikationssystems sowohl in Abwärtsrichtung als auch in Aufwärtsrichtung, d.h. eine gute Bitfehlerrate in Abhängigkeit vom Signal-Stör-Verhältnis, wünschenswert.

Die Performance bzw. die Leistungsfähigkeit in Abwärts- und Aufwärtsrichtung ist unter anderem abhängig von der Kanalschätzung, der schnellen Leistungsregelung und der Detektion der Format-Bits.

Die Güte der Kanalschätzung, die Funktionsfähigkeit der schnellen Leistungsregelung bzw. die Detektion der Format-Bits ist abhängig von der Anzahl N_{PILOT}, N_{TPC} und N_{TFCI} bzw. der Energie der jeweils zur Verfügung stehenden Bits.

Die Performance bzw. die Leistungsfähigkeit in Abwärts- und Aufwärtsrichtung kann deshalb suboptimal für ein gewähltes Werte-Tripel N_{PILOT}, N_{TPC} und N_{TFCI} sein.

Ist beispielsweise die Anzahl der N_{PILOT}-Bits zu gering, dann steht der Kanalschätzung zu wenig Energie zur Verfügung. Dies verursacht eine "schlechte" Kanalschätzung bzw. eine schlechtere (höhere) Bitfehlerrate im Empfänger, d.h. es liegt eine schlechtere Performance bzw. die Leistungsfähigkeit in Abwärts- und Aufwärtsrichtung vor. Ähnliches gilt für die N_{TPC}-Bits für die schnelle Leistungsregelung und die N_{TFCI}-Bits für die Transportformatangabe.

Das optimale Werte-Tripel ist von der Kanalbitrate, der Umgebung (Stadtgebiet, ländliches Gebiet, hügeliges Gebiet, In-House), der Entfernung der Mobilstation von der Basisstation, der Auslastung des WCDMA/FDD Systems (Anzahl der aktiven Verbindungen, Störung durch Interferenz aus benachbarten Zellen, etc.) abhängig.

Üblicherweise wird für eine bestimmte Kanalbitrate das Werte-Tripel N_{PILOT}, N_{TPC} und N_{TFCI} festgelegt und nicht variabel während einer Verbindung oder beim Übergang in eine andere Umgebung geändert.

Gemäß der Druckschrift *ETSI STC SMG2 UMTS-L1, Tdoc SMG2 UMTS-L1 168*/*98: "Flexible Power Allocation for Downlink DPCCH Fields", June 15-17, 1998, Turin, Italy* werden die Pilotbits, die Bits für die schnelle Leistungsregelung und die Formatbits im Vergleich zu den Datenbits des DPDCH mit höherer Leistung von der Basisstation gesendet. Nachteilig dabei ist, dass im Empfangsgerät die AGC bzw. der A/D-Wandler für die Datenbits des DPDCH-Kanals nicht mehr optimal ausgesteuert sind. Weiterhin ist nachteilig, dass im Sendegerät das Funkteil für einen sprungartigen Anstieg/Abfall der Sendeleistung ausgelegt sein muss. Vorteilhaft ist, dass die Anzahl der Datenbits des DPDCH-Kanals sich nicht ändert.

Aus der EP-0627827 A2 ist ein Verfahren zum Steuern der Übertragung von Informationsströmen mit variabler Rate in Funksystemen bekannt, bei dem verfügbare Bits der variabelratigen Informationsströme, die von unterschiedlichen Quellen im System herrühren und die bezogen auf die gleiche Kommunikationsverbindung auf dem gleichen Funkkanal übertragen werden, unter Berücksichtigung von mehreren Systemeigenschaften bzw. Systemparametern dynamisch allokiert werden.

Die der Erfindung zugrundeliegende Aufgabe besteht darin, die Leistungsfähigkeit bzw. die "Performance" von physikalischen Kanälen in Telekommunikationssystemen mit drahtloser Telekommunikation zwischen mobilen und/oder stationären Sende-/Empfangsgeräten in Abhängigkeit von der Kanaldatenübertragungsrate, der Systemumgebung, der Systemauslastung und der Entfernung zwischen den Sende-/Empfangsgeräten so zu verbessern, dass keine schaltungstechnische Änderungen an Sender und/oder Empfänger in den Sende-/Empfangsgeräten notwendig sind.

Diese Aufgabe wird ausgehend von der in dem Oberbegriff des Patentanspruches 1 definierten Luftschnittstelle durch die in dem Kennzeichen des Patentanspruches 1 angegebenen Merkmale gelöst.

Mit der vorliegenden Erfindung wird eine Luftschnittstelle vorgeschlagen, bei der die Anzahl von N_{PILOT}-Bits, N_{TPC}-Bits und N_{TFCI}-Bits jeweils variabel ist und bei der insbesondere während einer aktiven oder passiven Telekommunikationsverbindung zwischen mobilen und/oder stationären Sende-/Empfangsgeräten des Telekommunikationssystems die Anzahl der N_{PILOT}-Bits, N_{TPC}-Bits und N_{TFCI}-Bits jeweils durch Steuerungsmittel, z.B. durch eine geeignete "Schicht-2"- bzw. "Schicht-3"-Signalisierung ("Layer 2/3"-Signalling), die z.B. über den DPDCH-Kanal erfolgt, adaptiv änderbar bzw. optimierbar ist.

Gemäß Anspruch 2 ist es vorteilhaft, wenn die Verteilung der Daten, der N_{PILOT}-Bits, N_{TPC}-Bits und N_{TFCI}-Bits, in dem DPCCH-Kanal während der Telekommunikationsverbindung in Aufund/oder Abwärtsrichtung der Telekommunikation bei gleichbleibender Datenmenge im DPDCH-Kanal und gleichbleibender Gesamtdatenmenge pro Zeitschlitz verändert wird. Die Veränderung kann dabei auch soweit gehen, daß mindestens ein Bittyp der genannten Bits temporär (z.B. für die Dauer der entsprechenden Telekommunikationsverbindung) nicht in dem DPCCH-Kanal vertreten ist, also die Anzahl der entsprechenden Bits in dem DPCCH-Kanal gleich Null ist.

Gemäß Anspruch 3 ist es vorteilhaft, wenn die Veränderung der Verteilung der Daten durch Adaption an Eigenschaften der Telekommunikationsverbindung erfolgt.

Gemäß Anspruch 4 ist es vorteilhaft, wenn die Verteilung der Daten, der N_{PILOT}-Bits, N_{TPC}-Bits und N_{TFCI}-Bits, in dem DPCCH-Kanal während der Telekommunikationsverbindung in Aufund/oder Abwärtsrichtung der Telekommunikation durch Erhöhung der Gesamtdatenmenge pro Zeitschlitz verändert wird.

Diese Erhöhung kann gemäß Anspruch 8 in vorteilhafter Weise dadurch erreicht, dass die Gesamtdatenmenge pro Zeitschlitz durch Verringerung des Spreizfaktors vergrößert wird.

Gemäß Anspruch 5 ist es vorteilhaft, wenn die Verteilung der Daten, der N_{PILOT}-Bits, N_{TPC}-Bits und N_{TFCI}-Bits, in dem DPCCH-Kanal während der Telekommunikationsverbindung in Abwärtsrichtung der Telekommunikation bei gleichbleibender Gesamtdatenmenge pro Zeitschlitz verändert wird, indem ein Teil der N_{PILOT}-Bits, N_{TPC}-Bits und N_{TFCI}-Bits in dem DPCCH-Kanal dem DPDCH-Kanal zugeordnet werden oder ein Teil der Nutzbits (Nutzdaten) in dem DPDCH-Kanal dem DPCCH-Kanal zugeordnet werden.

Auf diese Weise ist es möglich, die Anzahl der N_{PILOT}-Bits, N_{TPC}-Bits und N_{TFCI}-Bits durch Weglassen bzw. Hinzufügen von Nutzbits bzw. Nutzdaten in dem DPDCH-Kanal zu erhöhen bzw. zu verringern (zu verkleinern, zu erniedrigen).

Den nachfolgenden Weiterbildungen der Erfindung gemäß Anspruch 6 und/oder Anspruch 7 liegt die allgemeine prinzipielle Überlegung zugrunde, die Tatsache bzw. den Umstand, dass gemäß der internationalen Anmeldung PCT/DE98/02894 geschätzte Kanalimpulsantworten miteinander korreliert sind, wobei der Grad der Korrelation selber mit der relativen Bewegung (langsam bzw. schnell) des mobilen Sende-/Empfangsgerätes bzw. der Mobilstation korreliert - bei einer langsamen Bewegung besteht eine starke Korrelation zwischen den geschätzten Kanalimpulsantworten, während bei einer schnellen Bewegung eine schwache Korrelation zwischen den geschätzten Kanalimpulsantworten besteht - und von dem stationären und/oder dem mobilen Sende-/Empfangsgerät erfasst werden kann, auszunutzen, indem z.B. Kanalimpulsantworten vorheriger Zeitschlitze von dem stationären und/oder dem mobilen Sende-/Empfangsgerät geschätzt werden.

Die Weiterbildung der Erfindung gemäß Anspruch 6 bietet den Vorteil, dass - wenn ein mobiles Sende-/Empfangsgerät (eine Mobilstation) sich sehr langsam mit einer Geschwindigkeit kleiner als 3 km/h bewegt (z.B. ein Datenterminal mit Remote-Email Access) und wenn die Kanalschätzung aufgrund der vorstehenden allgemeinen prinzipiellen Überlegungen deutlich verbessert werden kann - die Anzahl der N_{Pilot}-Bits verringert werden kann, ohne dass die Güte der Kanalschätzung merklich beeinträchtigt wird. In diesem Fall kann die Anzahl der N_{TFCI}-Bits für die Transportformatangabe und/oder der N_{TPC}-Bits für die schnelle Leistungsregelung erhöht werden. Insgesamt verbessert sich dadurch die Performance bzw. Leistungsfähigkeit des Telekommunikationssystems sowohl in Abwärtsrichtung als auch in Aufwärtsrichtung.

Die Weiterbildung der Erfindung gemäß Anspruch 7 bietet den Vorteil, dass - wenn unter Berücksichtigung der vorstehenden allgemeinen prinzipiellen Überlegungen ein mobiles Sende-/Empfangsgerät (eine Mobilstation) sich sehr schnell mit einer Geschwindigkeit größer als 150 km/h bewegt und wenn die schnelle Leistungsregelung das "Rayleigh-Fading" (schneller Schwund, im wesentlichen verursacht durch die Bewegung der Mobilstation) nicht mehr ausregeln kann und demzufolge nur noch eine Regelung des "Lognormal-Fadings" (langsamer Schwund, im wesentlichen verursacht durch Abschattungseffekte) erfolgen kann, wobei die Regelung des "Lognormal-Fadings" mit deutlich geringerer Rate der Bits für die schnelle Leistungsregelung erfolgen kann - z. B. die N_{TPC}-Bits für die schnelle Leistungsregelung nur noch in jedem zehnten Zeitschlitz gesendet werden. In den übrigen Zeitschlitzen werden die N_{TPC}-Bits für die schnelle Leistungsregelung weggelassen. Dafür werden dann zusätzliche N_{PILOT}-Bits für die Kanalschätzung und/oder N_{TFCI}-Bits für die Transportformatangabegesendet.

Die Weiterbildung der Erfindung gemäß der Ansprüche 6 und 7 bietet den Vorteil, dass unter Berücksichtigung der vorstehenden allgemeinen prinzipiellen Überlegungen zunächst, wenn - wie bei der Weiterbildung der Erfindung gemäß des Anspruches 6 - ein mobiles Sende-/Empfangsgerät (eine Mobilstation) sich zuerst sehr langsam bewegt, jeweils die bei dieser Weiterbildung verwendete Anzahl der N_{PILOT}-Bits, der N_{TFCI}-Bits, der N_{TPC}-Bits verwendet wird und daß dann, wenn - wie bei der Weiterbildung der Erfindung gemäß des Anspruches 7 - das mobile Sende-/Empfangsgerät (die Mobilstation) beginnt sich immer schneller zu bewegen, nach Überschreiten einer vorgegebenen Geschwindigkeit, z. B. 100 km/h, jeweils die bei dieser Weiterbildung verwendete Anzahl der N_{Pilot}-Bits, der N_{TFCI}-Bits, der N_{TPC}-Bits verwendet wird.

Zusätzliche vorteilhafte Weiterbildungen der Erfindungen sind in den übrigen Patentansprüchen angegeben.

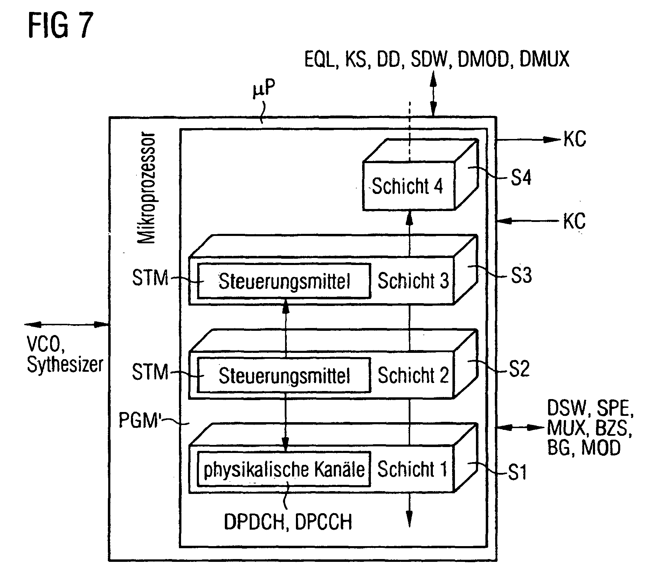

Die Erfindungen werden im Rahmen eines Ausführungsbeispieles anhand der FIGUR 7 erläutert. Es zeigt:
FIGUR 7 ausgehend von dem in den FIGUREN 5 und 6 dargestellten Mikroprozessor einen modifizierten Mikroprozessor.
FIGUR 7 zeigt ausgehend von dem in den FIGUREN 5 und 6 dargestellten Mikroprozessor µP einen modifizierten Mikroprozessor µP' mit einem modifizierten Programmmodul PGM'. Die Modifikation besteht darin, dass das modifizierte Programmmodul PGM' in der für die Datensicherung zuständigen zweiten Schicht S2 und in der für die Vermittlung zuständigen dritten Schicht S3 jeweils Steuerungsmittel STM enthält. Diese Steuerungsmittel STM sind derart ausgebildet und greifen in der Weise auf die physikalischen Kanäle DPCCH, DPDCH in der Schicht 1 zu, dass
   1. die Verteilung der N_{PILOT}-Bits in der Pilot-Sequenz PS, der N_{TPC}-Bits in der TPC-Sequenz TPCS und der N_{TFCI}-Bits in der TFCI-Sequenz TFCIS während der Telekommunikationsverbindung in Auf- und/oder Abwärtsrichtung der Telekommunikation bei gleichbleibender Datenmenge in der Nutzdatensequenz NDS und gleichbleibender Gesamtdatenmenge pro Zeitschlitz ZS durch Adaption an Eigenschaften der Telekommunikationsverbindung veränderbar ist und/oder
   2. die Verteilung der N_{PILOT}-Bits in der Pilot-Sequenz PS, der N_{TPC}-Bits in der TPC-Sequenz TPCS und der N_{TFCI}-Bits in der TFCI-Sequenz TFCIS während der Telekommunikationsverbindung in Auf- und/oder Abwärtsrichtung der Telekommunikation durch Erhöhung der Gesamtdatenmenge pro Zeitschlitz ZS veränderbar ist und/oder
   3. die Verteilung der N_{PILOT}-Bits in der Pilot-Sequenz PS, der N_{TPC}-Bits in der TPC-Sequenz TPCS und der N_{TFCI}-Bits in der TFCI-Sequenz TFCIS während der Telekommunikationsverbindung in Auf- und/oder Abwärtsrichtung der Telekommunikation bei gleichbleibender Gesamtdatenmenge pro Zeitschlitz ZS veränderbar ist, indem ein Teil der N_{PILOT}-Bits in der Pilot-Sequenz PS, der N_{TPC}-Bits in der TPC-Sequenz TPCS und der N_{TFCI}-Bits in der TFCI-Sequenz TFCIS dem DPDCH-Kanal zugeordnet werden oder ein Teil der N_{DATA}-Bits, der N_{DATA1}-Bits, der N_{DATA2}-Bits in der Nutzsequenz NDS dem DPCCH-Kanal zugeordnet werden.
      Darüber hinaus ist es möglich, daß die Steuerungsmittel STM derart ausgebildet sind und in der Weise auf die physikalischen Kanäle DPCCH, DPDCH in der Schicht 1 zugreifen, dass
   4. die Anzahl der N_{PILOT}-Bits in der Pilot-Sequenz PS zugunsten der Anzahl der N_{TPC}-Bits in der TPC-Sequenz TPCS und/oder der N_{TFCI}-Bits in der TFCI-Sequenz TFCIS verringert wird, wenn als eine erste Eigenschaft der Telekommunikationsverbindung sich das mobile Sende-/Empfangsgerät MS1...MS5 mit einer kleinen Geschwindigkeit von im wesentlichen kleiner als 5 km/h bewegt und/oder
   5. die Anzahl der N_{TPC}-Bit_{S} in der TPC-Sequenz TPCS zugunsten der Anzahl der N_{PILOT}-Bits in der Pilot-Sequenz PS und/oder der N_{TFCI}-Bits in der TFCI-Sequenz TFCIS verringert wird, wenn als eine zweite Eigenschaft der Telekommunikationsverbindung sich das mobile Sende-/Empfangsgerät MS1...MS5 mit einer großen Geschwindigkeit von im wesentlichen größer als 100 km/h bewegt.

## Patentansprüche

1. Luftschnittstelle für Telekommunikationssysteme mit drahtloser Telekommunikation zwischen mobilen und/oder stationären Sende-/Empfangsgeräten, bei der
(a) eine physikalische erste Schicht (S1) der Luftschnittstelle (PGM) in mindestens einem Zeitschlitz (ZS) einer Zeitrahmenstruktur (ZR, MZR) des Telekommunikationssystems für jede der ersten Schicht (S1) zugeordneten Telekommunikationsverbindung mindestens einen ersten physikalischen Kanal (DPCCH) und mindestens einen zweiten physikalischen Kanal (DPDCH) enthält,
(b) in dem ersten Kanal (DPCCH) ein erstes Datenfeld zur Kanalschätzung (PS) mit Kanalschätzungsdaten (N_{PILOT}) , ein zweites Datenfeld zur Leistungsregelung (TPCS) mit Leistungsregelungsdaten (N_{TPC}) und ein drittes Datenfeld zur Transportformatangabe (TFCIS) mit Transportformatangabedaten (N_{TFCI}) enthalten sind,
(c) in dem zweiten Kanal (DPDCH) ein Nutzdatenfeld (NDS) mit Nutzdaten (N_{DATA}, N_{DATA1}, N_{DATA2}) enthalten ist,
**dadurch gekennzeichnet, dass**
eine für die Datensicherung zuständige zweite Schicht (S2) und/oder eine für die Vermittlung zuständige dritte Schicht (S3) der Luftschnittstelle (PGM) jeweils Steuerungsmittel (STM) enthalten, die derart ausgebildet sind und in der Weise auf die physikalischen Kanäle (DPCCH, DPDCH) zugreifen, dass die Verteilung der Daten (N_{PILOT}, N_{TPC}, N_{TFCI}) der ersten, zweiten und dritten Datenfelder (PS, TPCS, TFCIS) während der Telekommunikationsverbindung in Auf- und/oder Abwärtsrichtung der Telekommunikation adaptiv veränderbar ist.

2. Luftschnittstelle nach Anspruch 1 **dadurch gekennzeichnet, dass**
die Steuerungsmittel (STM) derart ausgebildet sind und in der Weise auf die physikalischen Kanäle (DPCCH, DPDCH) zugreifen, dass die adaptive Veränderung der Verteilung der Daten (_{PILOT}, N_{TPC}, N_{TFCI}) bei gleichbleibender Datenmenge im Nutzdatenfeld (NDS) und gleichbleibender Gesamtdatenmenge pro Zeitschlitz (ZS) erfolgt.

3. Luftschnittstelle nach Anspruch 2 **dadurch gekennzeichnet, dass**
die Steuerungsmittel (STM) derart ausgebildet sind und in der Weise auf die physikalischen Kanäle (DPCCH, DPDCH) zugreifen, dass die adaptive Veränderung der Verteilung der Daten (N_{PILOT,} N_{TPC,} N_{TFCI}) durch Adaption an Eigenschaften der Telekommunikationsverbindung erfolgt.

4. Luftschnittstelle nach Anspruch 1 **dadurch gekennzeichnet, dass**
die Steuerungsmittel (STM) derart ausgebildet sind und in der Weise auf die physikalischen Kanäle (DPCCH, DPDCH) zugreifen, dass die adaptive Veränderung der Verteilung der Daten (N_{PILOT}, N_{TPC}, N_{TFCI}) durch Erhöhung der Gesamtdatenmenge pro Zeitschlitz (ZS) erfolgt.

5. Luftschnittstelle nach Anspruch 1 **dadurch gekennzeichnet, dass**
die Steuerungsmittel (STM) derart ausgebildet sind und in der Weise auf die physikalischen Kanäle (DPCCH, DPDCH) zugreifen, dass die adaptive Veränderung der Verteilung der Daten (N_{PILOT,} N_{TPC}, N_{TFCI}) bei gleichbleibender Gesamtdatenmenge pro Zeitschlitz (ZS) erfolgt, indem Daten (N_{PILOT}, N_{TPC}, N_{TFCI}) in den Datenfeldern (PS, TPCS, TFCIS) dem zweiten Kanal (DPDCH) zugeordnet werden oder Daten (N_{DATA}, N_{DATA1,} N_{DATA2}) in dem Nutzdatenfeld (NDS) dem ersten Kanal (DPCCH) zugeordnet werden.

6. Luftschnittstelle nach Anspruch 3 **dadurch gekennzeichnet, dass**
die Steuerungsmittel (STM) derart ausgebildet sind und in der Weise auf die physikalischen Kanäle (DPCCH, DPDCH) zugreifen, dass die Anzahl der Daten (N_{PILOT}) in dem ersten Datenfeld (PS) zugunsten der Anzahl der Daten (N_{TPC}, N_{TFCI}) in dem zweiten Datenfeld (TPCS) und/oder dem dritten Datenfeld (TFCIS) verringert wird, wenn als eine erste Eigenschaft der Telekommunikationsverbindung sich das mobile Sende-/Empfangsgerät (MS1 ... MS5) mit einer kleinen Geschwindigkeit von im wesentlichen kleiner als 5 km/h bewegt.

7. Luftschnittstelle nach Anspruch 3 oder 6, **dadurch gekennzeichnet, dass**
die Steuerungsmittel (STM) derart ausgebildet sind und in der Weise auf die physikalischen Kanäle (DPCCH, DPDCH) zugreifen, dass die Anzahl der Daten (N_{TPC}) in dem zweiten Datenfeld (TPCS) zugunsten der Anzahl der Daten (N_{PILOT}, N_{TFCI}) in dem ersten Datenfeld (PS) und/oder dem dritten Datenfeld (TFCIS) verringert wird, wenn als eine zweite Eigenschaft der Telekommunikationsverbindung sich das mobile Sende-/Empfangsgerät (MS1...MS5) mit einer großen Geschwindigkeit von im wesentlichen größer als 100 km/h bewegt.

8. Luftschnittstelle nach Anspruch 4, **dadurch gekennzeichnet, dass**
die Gesamtdatenmenge pro Zeitschlitz (ZS) bei einem auf dem Code-Division-Multiplex basierenden Telekommunikationssystem durch Verringerung des Spreizfaktors vergrößerbar ist.

9. Luftschnittstelle nach Anspruch 1 oder 8, **dadurch gekennzeichnet, dass**
das Telekommunikationssystem im FDD- und/oder TDD-Betrieb betreibbar ist.

10. Luftschnittstelle nach Anspruch 1, 8 oder 9, **dadurch gekennzeichnet, dass**
das Telekommunikationssystem im Breitband-Betrieb betreibbar ist.

11. Luftschnittstelle nach einem der Ansprüche 1 bis 3 oder nach einem der Ansprüche 5 bis 7, **dadurch gekennzeichnet, dass**
die Steuerungsmittel (STM) derart ausgebildet sind und in der Weise auf die physikalischen Kanäle (DPCCH, DPDCH) zugreifen, dass die Veränderung der Verteilung der Daten (N_{PILOT}, N_{TPC}, N_{TFCI}) durch Erhöhung der Gesamtdatenmenge pro Zeitschlitz (ZS) erfolgt.

12. Luftschnittstelle nach Anspruch 1, 2, 3, 6 oder 7, **dadurch gekennzeichnet, dass**
die Steuerungsmittel (STM) derart ausgebildet sind und in der Weise auf die physikalischen Kanäle (DPCCH, DPDCH) zugreifen, dass die Veränderung der Verteilung der Daten (N_{PILOT,} N_{TPC,} N_{TFCI}) bei gleichbleibender Gesamtdatenmenge pro Zeitschlitz (ZS) erfolgt, indem Daten (N_{PILOT,} N_{TPC,} N_{TFCI}) in den Datenfeldern (PS, TPCS, TFCIS) dem zweiten Kanal (DPDCH) zugeordnet werden oder Daten (N_{DATA}, N_{DATA1}, N_{DATA2}) in dem Nutzdatenfeld (NDS) dem ersten Kanal (DPCCH) zugeordnet werden.

## Claims

1. Air interface for telecommunications systems using wire-free telecommunication between mobile and/or stationary transmitting/receiving appliances in which:
(a) a physical first layer (S1) of the air interface (PGM) contains at least one first physical channel (DPCCH) and at least one second physical channel (DPDCH) in at least one time slot (ZS) of a time frame structure (ZR, MZR) of the telecommunications system for each telecommunications link which is allocated to the first layer (S1),
(b) the first channel (DPCCH) contains a first data field for channel estimation (PS) using channel estimation data (N_{PILOT}), a second data field for power control (TPCS) using power control data (N_{TPC}) and a third data field for traffic format channel indication (TFCIS) using traffic format channel indication data (N_{TFCI}),
(c) the second channel (DPDCH) contains a user data field (NDS) with user data (N_{DATA}, N_{DATA1}, N_{DATA2}),
**characterized in that**
a second layer (S2) which is responsible for data security and/or a third layer (S3) which is responsible for switching, of the air interface (PGM) each contain/contains control means (STM) which are designed in such a way and access the physical channels (DPCCH, DPDCH) in such a way that the distribution of the data (N_{PILOT,} N_{TPC,} N_{TFCI}) of the first, second and third data fields (PS, TPCS, TFCIS) during the telecommunications link can be varied adaptively in the uplink and/or downlink telecommunications directions.

2. Air interface according to Claim 1, **characterized in that**
the control means (STM) are designed in such a way and access the physical channels (DPCCH, DPDCH) in such a way that the distribution of the data (N_{PILOT,} N_{TPC,} N_{TFCI}) is changed adaptively while the amount of data in the user data field (NDS) remains the same and the total amount of data in each time slot (ZS) remains the same.

3. Air interface according to Claim 2, **characterized in that**
the control means (STM) are designed in such a way and access the physical channels (DPCCH, DPDCH) in such a way that the distribution of the data (N_{PILOT}, N_{TPC,} N_{TFCI}) is changed adaptively by adaptation to characteristics of the telecommunications link.

4. Air interface according to Claim 1, **characterized in that**
the control means (STM) are designed in such a way and access the physical channels (DPCCH, DPDCH) in such a way that the distribution of the data (N_{PILOT,} N_{TPC,} N_{TFCI}) is changed adaptively by increasing the total amount of data in each time slot (ZS).

5. Air interface according to Claim 1, **characterized in that**
the control means (STM) are designed in such a way and access the physical channels (DPCCH, DPDCH) in such a way that the distribution of the data (N_{PILOT}, N_{TPC}, N_{TFCI}) is changed adaptively with the total amount of data in each time slot (ZS) remaining the same **in that** data (N_{PILOT}, N_{TPC,} N_{TFCI}) in the data fields (PS, TPCS, TFCIS) is allocated to the second channel (DPDCH), or data (N_{DATA}, N_{DATA1}, N_{DATA2}) in the user data field (NDS) is allocated to the first channel (DPPCH).

6. Air interface according to Claim 3, **characterized in that**
the control means (STM) are designed in such a way and access the physical channels (DPCCH, DPDCH) in such a way that the number of data items (N_{PILOT}) in the first data field (PS) is reduced in favour of the number of data items (N_{TPC}, N_{TFCI}) in the second data field (TPCS) and/or the third data field (TFCIS) if, as a first characteristic of the telecommunications link, the mobile transmitting/receiving appliance (MS1...MS5) is moving at a low speed of significantly less than 5 km/h.

7. Air interface according to Claim 3 or 6, **characterized in that**
the control means (STM) are designed in such a way and access the physical channels (DPCCH, DPDCH) in such a way that the number of data items (N_{TPC}) in the second data field (TPCS) is reduced in favour of the number of data items (N_{PILOT}, N_{TFCI}) in the first data field (PS) and/or the third data field (TFCIS) if, as a second characteristic of the telecommunications link, the mobile transmitting/receiving appliance (MS1...MS5) is moving at a high speed of significantly more than 100 km/h.

8. Air interface according to Claim 4, **characterized in that**
the total amount of data per time slot (ZS) in a telecommunications system based on code division multiplex can be increased by reducing the spread factor.

9. Air interface according to either of Claims 1 and 8, **characterized in that**
the telecommunications system can be operated in the FDD and/or TDD mode.

10. Air interface according to Claims 1, 8 or 9, **characterized in that**
the telecommunications system can be operated in the broadband mode.

11. Air interface according to one of Claims 1 to 3 or according to one of Claims 5 to 7, **characterized in that**
the control means (STM) are designed in such a way and access the physical channels (DPCCH, DPDCH) in such a way that the distribution of the data (N_{PILOT}, N_{TPC}, N_{TFCI}) is varied by increasing the total amount of data per time slot (ZS).

12. Air interface according to Claim 1, 2, 3, 6 or 7, **characterized in that**
the control means (STM) are designed in such a way and access the physical channels (DPCCH, DPDCH) in such a way that the distribution of the data (N_{PILOT}, N_{TPC,} N_{TFCI}) is varied, with the total amount of data per time slot (ZS) remaining constant, **in that** data (N_{PILOT}, N_{TPC,} N_{TFCI}) in the data fields (PS, TPCS, TFCIS) are allocated to the second channel (DPDCH), or data (N_{DATA}, N_{DATA1,} N_{DATA2}) in the user data field (NDS) are allocated to the first channel (DPCCH).

## Revendications

1. Interface radio pour systèmes de télécommunication avec télécommunication sans fil entre des appareils d'émission / de réception mobiles et/ou fixes, dans laquelle
(a) une première couche physique (S1) de l'interface radio (PGM) contient dans au moins un créneau temporel (ZS) d'une structure de cadre temporel (ZR, MZR) du système de télécommunication pour chacune de la liaison de télécommunication associée à la première couche (S1) au moins un premier canal physique (DPCCH) et au moins un deuxième canal physique (DPDCH),
(b) dans le premier canal (DPCCH) sont contenus un premier champ de données pour l'estimation du canal (PS) avec des données d'estimation du canal (N_{PILOT}), un deuxième champ de données pour la régulation de la puissance (TPCS) avec des données de régulation de puissance (N_{TPC}) et un troisième champ de données pour l'indication du format de transport (TFCIS) avec des données d'indication du format de transport (N_{TFCI}),
(c) dans le deuxième canal (DPDCH) est contenu un champ de données
utiles (NDS) avec des données utiles (N_{DATA}, N_{DATA1}, N_{DATA2}),
**caractérisée en ce que**
une deuxième couche (S2), chargée de la sauvegarde des données et/ou une troisième couche (S3), chargée pour la commutation, de l'interface radio (PGM) contiennent à chaque fois des moyens de commande (STM) qui sont conçus de manière telle et accèdent aux canaux physiques (DPCCH, DPDCH) de telle sorte que la répartition des données (N_{PILOT}, N_{TPC}, N_{TFCI}) des premier, deuxième et troisième champs de données (PS, TPCS, TFCIS) pendant la liaison de télécommunication dans le sens aller et/ou retour de la télécommunication est modifiable de façon adaptative.

2. Interface radio selon la revendication 1, **caractérisée en ce que**
les moyens de commande (STM) sont conçus de manière telle et accèdent aux canaux physiques (DPCCH, DPDCH) de telle sorte que la modification adaptative de la répartition des données (N_{PILOT}, N_{TPC}, N_{TFCI}) se fait à quantité de données constante dans un champ de données utiles (NDS) et à quantité de données totale constante par créneau temporel (ZS).

3. Interface radio selon la revendication 2, **caractérisée en ce que**
les moyens de commande (STM) sont conçus de manière telle et accèdent aux canaux physiques (DPCCH, DPDCH) de telle sorte que la modification adaptative de la répartition des données (N_{PILOT}, N_{TPC}, N_{TFCI}) se fait par adaptation aux propriétés de la liaison de télécommunication.

4. Interface radio selon la revendication 1,**caractérisée en ce que**
les moyens de commande (STM) sont conçus de manière telle et accèdent aux canaux physiques (DPCCH, DPDCH) de telle sorte que la modification adaptative de la répartition des données (N_{PILOT}, N_{TPC}, N_{TFCI}) se fait par augmentation de la quantité de données totale par créneau temporel (ZS).

5. Interface radio selon la revendication 1, **caractérisée en ce que**
les moyens de commande (STM) sont conçus de manière telle et accèdent aux canaux physiques (DPCCH, DPDCH) de telle sorte que la modification adaptative de la répartition des données (N_{PILOT}, N_{TPC}, N_{TFCI}) se fait à quantité de données totale constante par créneau temporel (ZS), du fait que les données (N_{PILOT}, N_{TPC}, N_{TFCI}) dans les champs de données (PS, TPCS, TFCIS) sont associées au deuxième canal (DPDCH) ou les données (N_{DATA}, N_{DATA1}, N_{DATA2}) dans le champ de données utiles (NDS) sont associées au premier canal (DPCCH).

6. Interface radio selon la revendication 3, **caractérisée en ce que**
les moyens de commande (STM) sont conçus de manière telle et accèdent aux canaux physiques (DPCCH, DPDCH) de telle sorte que le nombre des données (N_{PILOT}) dans le premier champ de données (PS) est réduit au profit du nombre de données (N_{TPC}, N_{TFCI}) dans le deuxième champ de données (TPCS) et/ou le troisième champ de données (TFCIS), lorsque comme une première propriété de la liaison de télécommunication l'appareil d'émission / de réception mobile (MS1...MS5) se déplace à une petite vitesse essentiellement inférieure à 5 km/h.

7. Interface radio selon la revendication 3 ou 6, **caractérisée en ce que**
les moyens de commande (STM) sont conçus de manière telle et accèdent aux canaux physiques (DPCCH, DPDCH) de telle sorte que le nombre de données (N_{TPC}) dans le deuxième champ de données (TPCS) est réduit au profit du nombre de données (N_{PILOT}, N_{TFCI}) dans le premier champ de données (PS) et/ou le troisième champ de données (TFCIS), lorsque comme une deuxième propriété de la liaison de télécommunication l'appareil d'émission / de réception mobile (MS1...MS5) se déplace à une grande vitesse essentiellement supérieure à 100 km/h.

8. Interface radio selon la revendication 4, **caractérisée en ce que**
la quantité totale de données par créneau temporel (ZS) dans un système de télécommunication se basant sur le multiplexage par Code-Division peut être agrandie par la réduction du facteur d'étalage.

9. Interface radio selon la revendication 1 ou 8, **caractérisée en ce que**
le système de télécommunication est exploitable en fonctionnement FDD et/ou TDD.

10. Interface radio selon la revendication 1, 8 ou 9, **caractérisée en ce que**
le système de télécommunication est exploitable en fonctionnement à large bande.

11. Interface radio selon l'une des revendications 1 à 3 ou selon l'une des revendications 5 à 7, **caractérisée en ce que**
les moyens de commande (STM) sont conçus de manière telle et accèdent aux canaux physiques (DPCCH, DPDCH) de telle sorte que la modification de la répartition des données (N_{PILOT,} N_{TPC,} N_{TFCI}) se fait par augmentation de la quantité de données totale par créneau temporel (ZS).

12. Interface radio selon la revendication 1, 2, 3, 6 ou 7, **caractérisée en ce que**
les moyens de commande (STM) sont conçus de manière telle et accèdent aux canaux physiques (DPCCH, DPDCH) de telle sorte que la modification de la répartition des données (N_{PILOT}, N_{TPC}, N_{TFCI}) se fait à quantité de données totale constante par créneau temporel (ZS) du fait que les données (N_{PILOT}, N_{TPC}, N_{TFCI}) dans les champs de données (PS, TPCS, TFCIS) sont associées au deuxième canal (DPDCH) ou les données (N_{DATA}, N_{DATA1}, N_{DATA2}) dans le champ de données utiles (NDS) sont associées au premier canal (DPCCH).
